# EUROPÄISCHE PATENTSCHRIFT

(11) **EP 2 411 339 B1**
(45) Veröffentlichungstag und Bekanntmachung des Hinweises auf die Patenterteilung: **02.09.2015**
(21) Anmeldenummer: 10711338.3
(22) Anmeldetag: 19.03.2010
(51) Int. Cl.: C05F 7/00, C05B 13/06, C05B 13/04, C02F 101/20, C02F 101/10, C02F 11/06, C02F 1/70, C01B 25/32, C02F 11/10

(54) **VERFAHREN ZUR ELIMINIERUNG VON SCHADSTOFFEN AUS KLÄRSCHLAMM UND VERFAHREN ZUR HERSTELLUNG VON PHOSPHATEN UND PHOSPHATHALTIGEN VERBINDUNGEN**
PROCESS FOR ELIMINATING POLLUTANTS FROM SEWAGE SLUDGE AND PROCESS FOR PREPARING PHOSPHATES AND PHOSPHATE-CONTAINING COMPOUNDS
PROCÉDÉ D'ÉLIMINATION DES SUBSTANCES NOCIVES DANS LES BOUES DE CURAGE ET PROCÉDÉ DE FABRICATION DE PHOSPHATES ET DE COMPOSÉS PHOSPHATÉS

(30) Priorität: 25.03.2009 DE 102009014884
(43) Veröffentlichungstag der Anmeldung: 01.02.2012
(73) Patentinhaber: Klose, Ingeborg, 56626 Andernach (DE); Zepke, Frank, 48159 Münster (DE)
(72) Erfinder: Klose, Ingeborg, 56626 Andernach (DE); Zepke, Frank, 48159 Münster (DE)
(74) Vertreter: Patentanwälte Dr. Keller, Schwertfeger
(86) Internationale Anmeldenummer: PCT/EP2010/001736
(87) Internationale Veröffentlichungsnummer: WO 2010/108630

(56) Entgegenhaltungen:
- EP-A1- 1 477 461
- EP-A1- 1 669 467
- WO-A1-2007/124527
- DE-A1- 10 243 840
- DE-A1-102008 029 109
- US-A1- 2007 173 679

## Beschreibung

### Technisches Gebiet:

Die vorliegende Erfindung betrifft ein Verfahren zur Eliminierung von Schwermetallen aus Klärschlamm industrieller oder kommunaler Anlagen gemäß dem Oberbegriff des Patentanspruchs 1 sowie ein Verfahren zur Herstellung von Phosphaten und phosphathaltigen Verbindungen.

### Stand der Technik:

Phosphate spielen bei der Herstellung einer Reihe von chemischen Produkten eine wichtige Rolle. So werden sie beispielsweise als Dünger, Waschmittelzusätze, Lebensmittelzusatzstoffe, Futtermittel, Korrosionsschutzmittel verwendet. Chemisch gesehen sind Phosphate Salze und Ester der Ortho-Phosphorsäure. Vorwiegend werden Phosphate aus sedimentären oder vulkanischen Lagerstätten gewonnen. Solche Vorkommen sind jedoch in absehbarer Zeit erschöpft, so dass mit einem Mangel an Phosphatrohstoffen zu rechnen ist.

Die Hauptvorkommen von Phosphaten natürlichen Ursprungs liegt im nördlichen Afrika, Marokko, Westsahara, auf der Kola-Halbinsel in Russland, Florida, Südafrika und China. Weitere Vorkommen sind auch noch in Saudi-Arabien vorhanden, einige andere Abbauorte sind bereits erschöpft.

Ein Problem der aus diesen Quellen isolierten Phosphate besteht darin, dass die mineralischen Quellen insbesondere mit Cadmium, aber auch mit anderen Schwermetallen und sogar mit Uran belastet sind. Viele Industrieländer haben deshalb einen Grenzwert für die Cadmiumkonzentration in Düngemitteln eingeführt.

Verfahren zur thermischen Behandlung von Klärschlämmen und Phosphatgewinnung sind beispielsweise in der DE 102 43 840 B4, EP 1 477 461 A1, DE 197 20 889 C1 und der DE 35 31 647 A1 beschrieben.

In der DE 102 43 840 B4 wird ein Verfahren zur Abtrennung von umweltrelevanten Schwermetallen aus Klärschlammasche beschrieben, bei dem Alkali- und/oder Erdalkalichloride mit Klärschlammasche gemischt werden und dann anschließend eine Erwärmung der Mischung über den Siedepunkt der sich bildenden Chloride der Schwermetalle erfolgt, wobei die aus der Mischung austretenden gasförmigen Schwermetallchloride getrennt aufgefangen werden. Eine Reduktionsstufe ist nicht vorgesehen.

In der EP 1 477 461 A1 werden eine Vorrichtung und ein Verfahren zur Trocknung und Vergasung von Schlamm beschrieben. Es handelt sich hierbei um ein vierstufiges Verfahren, das eine Teiloxidation der kohlenstoffhaltigen Komponenten des Schlammes mit Wasserdampf vorsieht. Die Wasserdampfvergasung erfolgt dabei unter Luftabschluss während der Wasserdampfvergasungsstufe.

In der DE 197 20 889 C1 wird die Herstellung von Baustoffen beschrieben, wobei die totale Inertisierung der mineralischen Inhaltsstoffe zwangsläufig zielgebend ist. Hierfür wird pelletierter oder granulierter Schlamm keramisch gebrannt. Eine Verbrennung, welche zur Aschebildung führt, wird nicht beschrieben.

In der DE 39 18 718 C2, welche den nächsten Stand der Technik darstellen dürfte, wird die thermische Behandlung von festen und schlammförmigen organischen Stoffen und von mit organischen Stoffen verunreinigten anorganischen Stoffen beschrieben. Dabei wird zunächst eine Pyrolyse von Klärschlamm unter Zusatz von CaO in einem Inertgasstrom zwischen 300 und 400° C durchgeführt. Anschließend erfolgt in einem weiteren Verfahrensschritt eine Pyrolyse bei 600 bis 800° C, bei der die Schwermetalle an CaO abgebunden werden. Es kommt hierbei zu keiner Eliminierung von Schwermetallen in der gasförmigen Phase, sondern zu einer Bindung in einer oxidierten Form, das heißt das Schwermetall wird vollständig in die schwer lösliche oxidische Form übergeführt.

In der DE 10 2004 059 935 A1 wird ein Verfahren zur Abtrennung von Schwermetallen aus Klärschlammasche beschrieben. Bei dem darin beschriebenen Verfahren werden Schwermetalle aus phosphathaltiger Klärschlammasche abgetrennt, indem die Temperatur oberhalb des Siedepunktes der Oxi-Chloride oder Chloride der zu entfernenden Schwermetalle erwärmt wird, wobei die erwärmte Klärschlammasche mit einer chlorgashaltigen Atmosphäre in Kontakt gebracht wird und die sich bildenden gasförmigen Oxi-Chloride oder Chloride der Schwermetalle getrennt aufgefangen werden. Bei dem Verfahren handelt es sich also um eine übliche Monoverbrennung (nur Klärschlamm wird verbrannt), bei dem feste Zuschlagsstoffe, insbesondere Alkali- und/oder Erdalkali-Oxide und/oder Alkali- und/oder Erdalkali-Karbonate zugeführt werden. Nach dem Vermischen der Substrate wird die reine Klärschlammasche in einen Reaktor überführt, in dem es schließlich in einer chlorhaltigen Atmosphäre zu einer Verbrennung bei Temperaturen von > 850° C kommt. Die in der Klärschlammasche vorhandenen Schwermetalle gehen zumindest teilweise in die Gasphase über. Nachteilig ist bei diesem Verfahren, dass die Einstellung der thermochemischen Reaktion und die Stabilisierung der Oxi-Chloride und Chloride der entsprechenden Schwermetalle aufwändig sind und je nach Bedarf unterschiedliche Gase sowie Luft zugeführt werden müssen. Ein ähnliches Verfahren über eine Verbrennung ist auch in der DE 102 43 840 B4 beschrieben.

In der DE 27 29 277 A1 ist ein Verfahren zur Behandlung von Schlämmen oder Aschen bekannt, welche in Gegenwart von Aufschlussmitteln einer Hochtemperaturbehandlung bei Temperaturen zwischen 600 und 1400° C unterzogen werden. Auch hier handelt es sich um eine einfache Verbrennung und somit ein einstufiges Verfahren.

In der WO 2007/124527 A1 wird ein Verfahren zur Abtrennung von Schwermetallen sowie ein Ascheagglomerat in Form von einzelnen Granulatteilchen bzw. in Pellets mit Substrateigenschaften beschrieben. Dabei wird in einem ersten Schritt zu der Asche umweltverträgliche Metallchloride ggf. Füllstoffe zugemischt und die Mischungen einer Agglomeration unterzogen und anschließend das so erhalten Agglomerat auf eine Temperatur über den Siedepunkt der sich bildenden Schwermetall Chloride erwärmt. Das schwermetallreduzierte poröse Ascheagglomerat kann in originärer, gemahlener erneut granulierter Partikelform als Düngemittel verwendet werden.

Nachteilig bei einem solchen aus dem Stand der Technik bekannten einstufigen Verbrennungsverfahren ist, dass lediglich organische Schadstoffe einschließlich endokriner Substanzen durch den Verbrennungsprozess zerstört werden. Andere umweltrelevante Schwermetalle wie Blei, Cadmium, Chrom, Kupfer, Nickel, Zink und Quecksilber können auf diese Weise nicht innerhalb der festgelegten Grenzwerte eliminiert werden. Aus diesem Grund sind Produkte eines Monoverfahrens für die Verwendung der Klärschlammasche als Landwirtschaftsdünger problematisch und je nach Herkunft des Klärschlammes auch unzulässig. In Deutschland wird ein großer Teil des anfallenden Klärschlammes zu Klärschlammasche verbrannt und unter Tage deponiert oder als Bergversatz eingesetzt. Dadurch wird ein erhebliches Potential der nützlichen Rohstoffe wie Phosphate vernichtet.

### Darstellung der Erfindung:

Im Hinblick auf den bekannten Stand der Technik ist es Aufgabe der vorliegenden Erfindung, die bekannten Verfahren zu verbessern, um eine hohe Phosphatqualität und eine hohe Eliminationsrate an Schwermetallen aus Klärschlämmen zu erhalten.

Diese Aufgabe wird gelöst durch ein Verfahren mit den Merkmalen des Anspruchs 1.

Die Erfinder haben überraschenderweise festgestellt, dass durch die-Kombination einer Reduktionsstufe und einer Oxidationsstufe ein wesentlicher Teil der Schwermetalle über die erzeugten Energiegase eliminiert werden kann.

Das erfindungsgemäße Verfahren ist ein zweistufiges Verfahren, bei dem zunächst der Klärschlamm unter Sauerstoffabschluss und reduzierenden Bedingungen bei Temperaturen zwischen 500° C bis 1100° C einer Pyrolyse unterzogen wird, wobei unter anderem energiereiche Gase und phosphathaltiger Klärschlammkoks entstehen. In einer dieser ersten Reduktionsstufe folgenden zweiten Oxidationsstufe erfolgt eine Nachverbrennung des im ersten Schritt entstandenen Klärschlammkoks unter oxidierenden Bedingungen, wobei ein anorganischer Rest aus alkalischen Karbonaten und Erdalkali-Oxiden sowie Erdalkali-Phosphaten entsteht. Das in den Erdalkali-Phosphaten vorliegende Phosphat kann zur Weiterverarbeitung (beispielsweise zur Herstellung von Phosphorsäure) isoliert werden.

Es wurde überraschenderweise festgestellt, dass sowohl in der Reduktionsstufe als auch Oxidationsstufe ein wesentlicher Anteil der Schwermetalle über die Energiegase eliminiert werden kann. Eine oxidative Verbrennung alleine, wie sie im Stand der Technik beschrieben wurde, führt nicht zu der erwünschten Phosphat-Qualität und hohen Eliminationsrate an Schwermetallen.

Besonders vorteilhaft hat sich in der Reduktionsstufe eine Temperatur zwischen 700 und 900° C erwiesen. Bei dieser Temperatur ist die Schwermetall-Eliminierung und Phosphatausbeute am größten. Vorzugsweise wird der Klärschlamm bzw. der phosphathaltige Klärschlammkoks vor dem ersten bzw. zweiten Verfahrensschritt umgewälzt. Durch die kontinuierliche Umwälzung kann die Phosphatausbeute und Qualität weiter erhöht werden. Ferner hat es sich als vorteilhaft erwiesen, Alkalien und/oder Erdalkalien in Form ihrer Chloride dem Klärschlamm zuzusetzen, wodurch die Schwermetallkonzentration in den Zwischenprodukten und Produkten weiter gesenkt werden kann. Besonders vorteilhaft hat sich zu diesem Zweck Magnesiumchlorid (MgCl₂) erwiesen.

Ferner ist es vorteilhaft, wenn der Klärschlammzusammensetzung Siliziumverbindungen, beispielsweise in Form von Wasserglas, Kieselgur und/oder Perliten zugesetzt werden. Das Verfahren kann entweder in unterschiedlichen Reaktionsbehältern in der Batch-Arbeitsweise oder in demselben Reaktionsbehälter durchgeführt werden. Die Temperatur in der oxidativen Phase beträgt vorzugsweise zwischen 800 und 1200°C. Der erste und zweite Verfahrensschritt werden vorzugsweise für eine Zeitdauer von jeweils 10 Minuten bis 3 Stunden durchgeführt. Die in den einzelnen Verfahrensschritten entstehende Energie kann dem Verfahren zurückgeführt werden. Dadurch ist das Verfahren energetisch selbsterhaltend durchführbar. In bevorzugten Ausführungsformen kann die Energie zur Erzeugung von elektrischem Strom oder Sattdampfen genutzt werden. Es stellt somit ein sehr umweltfreundliches Verfahren dar, das die in dem Ausgangsmaterial enthaltene Energie vorteilhaft ausnutzt.

Es ist ferner möglich, dass die im ersten Verfahrensschritt entstehenden Gase abgesaugt und entschwefelt werden. Für die Entschwefelung haben sich Schwefelbakterien als vorteilhaft erwiesen.

Der der ersten Reduktionsstufe zugeführte Klärschlamm ist vorzugsweise auf mehr als 60 % Trockensubstanz getrocknet und kommt entweder aus kommunalen oder industriellen Kläranlagen.

Ein weiterer Aspekt der vorliegenden Erfindung betrifft ein Verfahren zur Herstellung von Phosphaten und/oder phosphathaltigen Verbindungen aus Klärschlamm. Das zweistufige Verfahren besteht aus den zuvor genannten Verfahrensschritten:
(a) Zuführen von Klärschlamm in eine Reduktionsstufe, bei der unter Sauerstoffabschluss unter reduzierenden Bedingungen bei Temperaturen zwischen 500° bis 1100° C eine Pyrolyse stattfindet, bei der unter anderem energiereiche Gase und phosphathaltiger Klärschlammkoks entstehen,
(b) Nachverbrennung des in Schritt (a) entstandenen Klärschlammkoks in einer Oxidationsstufe unter oxidierenden Bedingungen, wobei ein anorganischer Rest aus Erdalkalikarbonaten und Erdalkalioxiden sowie Erdalkaliphosphaten entsteht.

Das zweistufige Verfahren ist besonders vorteilhaft, da Phosphate oder phosphathaltige Verbindungen in einer höheren Konzentration und größerer Reinheit gewonnen werden können. Das verfügbare Phosphat (P₂O₅) beträgt im Klärschlamm etwa 2 bis über 16 %. Nach dem ersten Verfahrensschritt in der Reduktionsstufe beträgt die Konzentration des verfügbaren Phosphats im Klärschlammkoks zwischen 6 und über 25 %. In der sich anschließenden zweiten Oxidationsstufe können schließlich Ausbeuten von 32 % oder sogar darüber erreicht werden. Bei dem erfindungsgemäßen Verfahren wird der Kohlenstoff in dem zweiten Verfahrensschritt nahezu vollständig eliminiert. Das erfindungsgemäße Verfahren ist daher gegenüber bekannten einstufigen Monoverbrennungsverfahren deutlich im Vorteil.

Eine weitere Behandlung der gewonnenen Erdalkaliphosphate mit Lebensmittel-Schwefelsäure führt zu nahezu chemisch reiner Phosphorsäure, welche industriell verwertet werden kann. Die mit dem erfindungsgemäßen Verfahren erzielten Ausbeuten und Reinheitsgrade lassen sich mit den weltweit vorkommenden natürlichen Phosphatvorräten ebenso wenig erreichen wie unter den Bedingungen einer üblichen Mono-Verbrennung von Biomasse erzeugten Phosphaten. Die Erfindung findet bei der Herstellung von Dünger, Kosmetikprodukten, Waschmittelprodukten, pharmazeutischen Produkten, Lebensmittelprodukten, Futtermittelprodukten und sonstigen phosphathaltigen chemischen Produkten Anwendung.

### Beschreibung der Zeichnungen:

Die Erfindung wird in den nachfolgenden Figuren genauer erläutert.

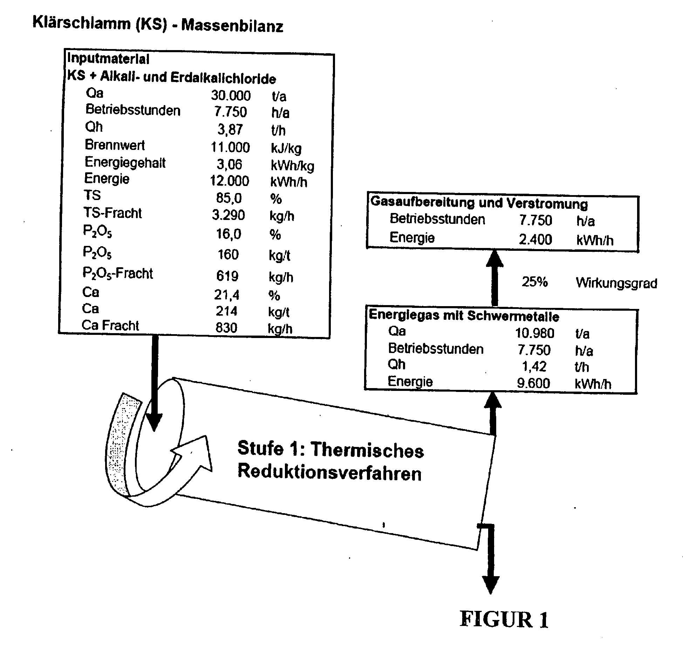

Fig. 1 zeigt ein einfaches Fließbild für die Klärschlammaufbereitung entsprechend dem zweistufigen erfindungsgemäßen Verfahren. Die im Klärschlamm enthaltenen umweltgefährlichen Schwermetalle werden über die Energiegase, welche in der ersten Reduktionsstufe sowie der zweiten Oxidationsstufe entstehen, aus dem Reaktionszyklus entfernt. Als Produkt entsteht konzentriertes, schwermetallarmes Phosphat mit einem hohen Reinheitsgrad. Ein weiterer Vorteil ist darin zu sehen, dass die im Klärschlamm enthaltenen umweltgefährlichen organischen Verbindungen und sogar polyfluorierten Tenside, welche als Syntheseprodukt äußerst stabil sind, ebenfalls zerlegt und eliminiert werden.

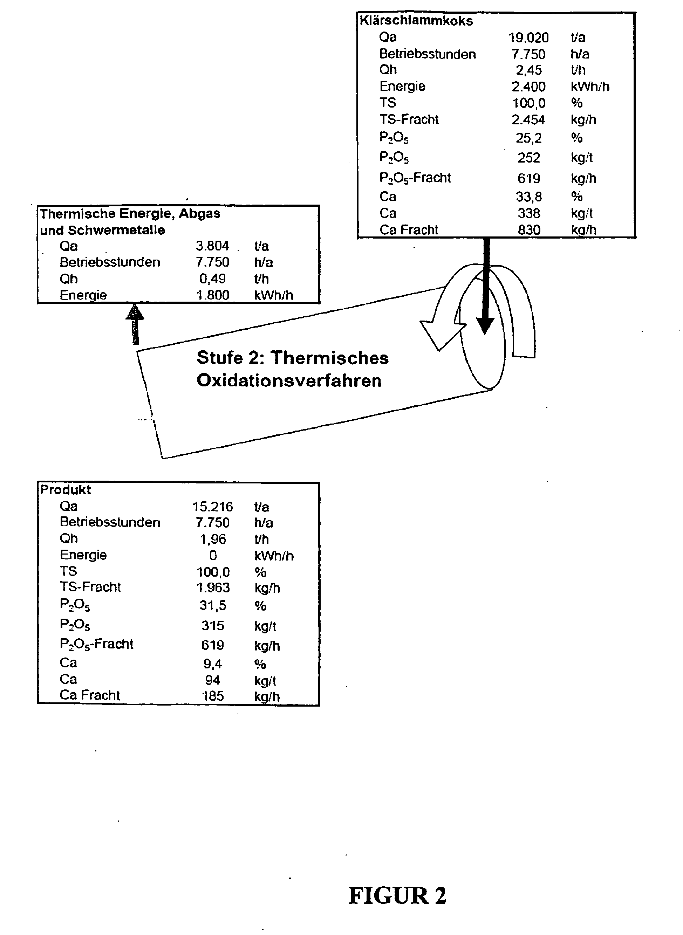

Fig. 2 zeigt die Massenbilanz des erfindungsgemäßen Verfahrens bei Verwendung von Klärschlamm als Ausgangsmaterial. Aufgeführt sind die einzelnen Parameter und insbesondere die Energiebilanz. Die eingesetzte Klärschlammmasse (Qa) beträgt in diesem Beispiel 30.000 t/a. Die Phosphatausbeute (P₂O₅) kann innerhalb der einzelnen Verfahrensstufen (Stufe 1: thermisches Reduktionsverfahren; Stufe 2: thermisches Oxidationsverfahren) verfolgt werden. Im Endprodukt werden Phosphatausbeuten von bis zu 40 % P₂O₅ erreicht. Von den eingesetzten 30.000 t/a getrocknetem Klärschlamm sind nahezu 15.000 t/a mineralische Ausbeute im Produkt. Die frei werdende Energie wird z.B. in elektrischen Strom umgewandelt. Die positive Energiebilanz des Verfahrens leistet einen wichtigen Beitrag zu einer ökonomischen und ökologischen Prozessgestaltung.

Die Erfindung wird in den nachfolgenden Beispielen erläutert.

### Beispiele:

In den nachfolgend aufgeführten Beispielen wurden insgesamt acht verschiedene Versuchsanordnungen durchgeführt.

### Versuchsanordnungen:

1. Ausgangsmaterial: Klärschlamm, entwässert und auf > 60 % Trockensubstanz vorgetrocknet
2. Klärschlamm nach der Reduktionsstufe (reduktiv behandelt)
3. Klärschlamm unter Zusatz von MgCl₂ in der Reduktionsstufe (reduktiv behandelt)
4. Klärschlamm nach der zweiten Oxidationsstufe (oxidativ nachverbrannt)
5. Klärschlamm unter Zusatz von MgCl₂ nach der zweiten Oxidationsstufe (oxidativ nachverbrannt)

Entwässerter und vorgetrockneter Klärschlamm wurde entsprechend den einzelnen Versuchsvarianten V1, V2, V3, V4, V5 unter reduktiven Bedingungen in der Reduktionsstufe bei einer Temperatur von 800°C für 1 Stunde einer Pyrolyse unterzogen.

Die Versuchsvarianten V4 und V5 wurden anschließend in der darauf folgenden Oxidationsstufe bei Temperaturen von 1000 °C für 1 Stunde oxidativ nachverbrannt. Für jede Versuchsvariante wurde die Phosphatlöslichkeit nach der reduktiven Behandlung und oxidativen Nachverbrennung bestimmt.

In der Tabelle 1 sind die Phosphatausbeuten der einzelnen Versuchsvarianten sowie die Schwermetallbelastung nach der Reduktionsstufe und Oxidationsstufe gezeigt.

In der oxidativen Phase konnte nahezu der gesamte Rest-Kohlenstoff in thermische Energie umgesetzt wird.

**Tabelle 1:**

| | | in TS | | Var.1 | Var. 2 | Var. 3 | Var. 4 | Var. 5 |
|---|---|---|---|---|---|---|---|---|
| Asche | | % | | 63,4 | n.b. | n.b. | n.b. | n.b. |
| Organische Substanz | | % | | 11,6 | n.b. | n.b. | n.b. | n.b. |
| Gesamtphosphat | P₂O₅ | % | (BwB) | 2,9 | 6,7 | 5,4 | 8,1 | 7,8 |
| Calciumoxid | CaO | % | | 30,8 | 33,8 | 29,0 | 41,7 | 33,5 |
| Kupfer | Cu | ppm | | 227,0 | 478,0 | 286,0 | 423,0 | 383,0 |
| Arsen | As | ppm | | n.b. | 59,1 | 40,8 | 57,7 | 50,0 |
| Blei | Pb | ppm | | 20,2 | 39,9 | 30,8 | 33,5 | 18,8 |
| Cadmium | Cd | ppm | | 0,77 | 0,99 | < 0,5 | < 0,5 | < 0,5 |
| Quecksilber | Hg | ppm | | 0,23 | < 0,05 | < 0,05 | < 0,05 | < 0,05 |
| Thallium | TI | ppm | | n.b. | < 0,5 | < 0,5 | < 0,5 | < 0,5 |
| | | | | | | | | |

## Patentansprüche

1. Verfahren zur Eliminierung von Schwermetallen aus Klärschlamm industrieller oder kommunaler Anlagen, bestehend aus den Schritten:
(a) Erhitzen von Klärschlamm in einer Reduktionsstufe unter Sauerstoffabschluss bei Temperaturen zwischen 500° bis 1100° C,
(b) Nachverbrennung des in Schritt (a) entstandenen Klärschlammkoks in einer Oxidationsstufe bei Temperaturen zwischen 800 und 1200°C, bei der der gesamte Rest-Kohlenstoff in thermische Energie umgesetzt wird.

2. Verfahren nach Anspruch 1, **dadurch gekennzeichnet, dass** der Schritt (a) bei einer Temperatur zwischen 700° bis 900°C durchgeführt wird.

3. Verfahren nach einem der Ansprüche 1 oder 2, **dadurch gekennzeichnet, dass** der Klärschlamm vor dem Schritt (a) und/oder der Klärschlammkoks vor dem Schritt (b) umgewälzt wird.

4. Verfahren nach einem der Ansprüche 1 bis 3, **dadurch gekennzeichnet, dass** dem Klärschlamm zusätzlich Alkali- und/oder Erdalkalichloride zugeführt werden.

5. Verfahren nach Anspruch 4, **dadurch gekennzeichnet, dass** 1 bis 30 %, vorzugsweise 3 % MgCl₂ zugegeben werden.

6. Verfahren nach einem der Ansprüche 1 bis 5, **dadurch gekennzeichnet, dass** dem Klärschlamm zusätzlich Siliziumverbindungen wie Wasserglas, Kieselgur und/oder Perlite zugegeben werden.

7. Verfahren nach einem der Ansprüche 1 bis 6, **dadurch gekennzeichnet, dass** die beiden Reaktionsschritte (a) und (b) in demselben Reaktionsbehälter durchgeführt werden.

8. Verfahren nach einem der Ansprüche 1 bis 7, **dadurch gekennzeichnet, dass** die in dem Schritt (a) und/oder dem Schritt (b) gewonnenen Energiegase dem Verfahren rückgeführt werden.

9. Verfahren nach einem der Ansprüche 1 bis 8, dass die in dem Schritt (a) und/oder dem Schritt (b) gewonnenen Energiegase zur Erzeugung von elektrischem Strom Verwendung finden.

10. Verfahren nach einem der Ansprüche 1 bis 8, dass die in dem Schritt (a) und/oder dem Schritt (b) gewonnenen Energiegase zur Erzeugung von Sattdampf Verwendung finden.

11. Verfahren zur Herstellung von Phosphaten und/oder phosphathaltigen Verbindungen aus Klärschlamm industrieller oder kommunaler Anlagen, **dadurch gekennzeichnet, dass** die Phosphate über ein Verfahren gemäß einem der Ansprüche 1 bis 7 gewonnen werden.

12. Verfahren nach Anspruch 11, **dadurch gekennzeichnet, dass** die in dem Verfahren entstehenden Erdalkali-Phosphate oder phosphathaltigen Verbindungen mit Schwefel- und/oder Phosphorsäure umgesetzt werden.

## Claims

1. Method for removing heavy metals from sludge from industrial or municipal plants, consisting of the steps of:
(a) heating sludge in a reduction stage without oxygen and at temperatures of between 500 °C and 1100 °C,
(b) afterburning the sludge coke, produced in step (a), in an oxidation step at temperatures of between 800 °C and 1200 °C, in which all the residual carbon is converted into thermal energy.

2. Method according to claim 1, **characterised in that** step (a) is carried out at a temperature of between 700 °C and 900 °C.

3. Method according to either claim 1 or claim 2, **characterised in that** the sludge is recirculated prior to step (a) and/or the sludge coke is recirculated prior to step (b).

4. Method according to any of claims 1 to 3, **characterised in that** alkali chloride and/or alkaline earth chloride is also added to the sewer sludge.

5. Method according to claim 4, **characterised in that** from 1 to 30 %, preferably 3 %, of MgCl₂ is added.

6. Method according to any of claims 1 to 5, **characterised in that** silicon compounds such as sodium silicate, diatomaceous earth and/or perlites are also added to the sludge.

7. Method according to any of claims 1 to 6, **characterised in that** both reaction step (a) and reaction step (b) are carried out in the same reaction vessel.

8. Method according to any of claims 1 to 7, **characterised in that** the energy gases obtained in step (a) and/or in step (b) are fed back into the process.

9. Method according to any of claims 1 to 8, in which the energy gases obtained in step (a) and/or in step (b) are used to generate electrical current.

10. Method according to any of claims 1 to 8, in which the energy gases obtained in step (a) and/or in step (b) are used to generate saturated steam.

11. Method for producing phosphates and/or phosphate-containing compounds from sludge from industrial or municipal plants, **characterised in that** the phosphates are obtained by means of a method according to any of claims 1 to 7.

12. Method according to claim 11, **characterised in that** the alkaline earth phosphates or phosphate-containing compounds produced during the method are reacted with sulfuric acid and/or phosphoric acid.

## Revendications

1. Procédé d'élimination des métaux lourds de boues d'épuration d'installations industrielles ou communales, comprenant les étapes suivantes :
(a) chauffage des boues d'épuration dans un étage de réduction en l'absence d'oxygène à des températures comprises entre 500 et 1100 °C,
(b) Post-combustion du coke de boues d'épuration produit à l'étape (a) dans un étage d'oxydation à des températures comprises entre 800 et 1200 °C, lors de laquelle tout le carbone résiduel est converti en énergie thermique.

2. Procédé selon la revendication 1, **caractérisé en ce que** l'étape (a) est exécutée à une température comprise entre 700 et 900 °C.

3. Procédé selon l'une des revendications 1 ou 2, **caractérisé en ce que** les boues d'épuration sont brassées avant l'étape (a) et/ou le coke de boues d'épuration avant l'étape (b).

4. Procédé selon l'une des revendications 1 à 3, **caractérisé en ce que** des chlorures alcalins et/ou alcalino-terreux sont amenés en plus aux boues d'épuration.

5. Procédé selon la revendication 4, **caractérisé en ce que** de 1 à 30 %, de préférence 3 % de MgCl₂ sont ajoutés.

6. Procédé selon l'une des revendications 1 à 5, **caractérisé en ce que** des composés siliciés tels que verre liquide, terre de diatomées et/ou perlite sont ajoutés en plus aux boues d'épuration.

7. Procédé selon l'une des revendications 1 à 6, **caractérisé en ce que** les deux étapes de réaction (a) et (b) sont exécutées dans le même récipient de réaction.

8. Procédé selon l'une des revendications 1, à 7, **caractérisé en ce que** les gaz énergétiques obtenus à l'étape (a) et/ou à l'étape (b) sont recyclés dans le procédé.

9. Procédé selon l'une des revendications 1 à 8, **caractérisé en ce que** les gaz énergétiques obtenus à l'étape (a) et/ou à l'étape (b) sont utilisés pour produire du courant électrique.

10. Procédé selon l'une des revendications 1 à 8, **caractérisé en ce que** les gaz énergétiques obtenus à l'étape (a) et/ou à l'étape (b) sont utilisés pour produire de la vapeur saturée.

11. Procédé de production de phosphates et/ou de composés phosphatés à partir de boues d'épuration d'installations industrielles ou communales, **caractérisé en ce que** les phosphates sont obtenus au moyen d'un procédé selon l'une des revendications 1 à 7.

12. Procédé selon la revendication 11, **caractérisé en ce que** les phosphates alcalino-terreux et les composés phosphatés produits dans le procédé sont transformés avec de l'acide sulfurique et/ou phosphorique.
